# EUROPEAN PATENT APPLICATION

(11) **EP 0 689 835 A2**
(43) Date of publication of application: **03.01.1996**
(21) Application number: 95304622.4
(22) Date of filing: 30.06.1995
(51) Int. Cl.: A61K 31/195, A61K 31/20

(54) **Composition comprising a mixture of amino acids and at least one N-3 fatty acid**

(30) Priority: 30.06.1994 JP 149161/94
(71) Applicant: Ajinomoto Co., Inc., Tokyo 104 (JP)
(72) Inventor: Sonaka, Ichiro c/o C. Res. Lab., Ajinomoto Co. Inc, Kawasaki-shi, Kanagawa-ken (JP); Honma, Nobuko c/o C. Res. Lab., Ajinomoto Co. Inc., Kawasaki-shi, Kanagawa-ken (JP); Kobayashi, Tetsuo C. Res. Lab.,Ajinomoto Co. Inc., Kawasaki-shi, Kanagawa-ken (JP); Kajiwara, Kenta C. Res. Lab., Ajinomoto Co. Inc., Kawasaki-shi, Kanagawa-ken (JP); Maki, Toshio c/o C. Res. Lab., Ajinomoto Co. Inc., Kawasaki-shi, Kanagawa-ken (JP)
(74) Representative: Nicholls, Kathryn Margaret

(57) **Abstract**

A nutrient composition for the treatment or prophylaxis of inflammatory bowel disease comprises 15 to 30 wt% of an amino acid mixture of the following composition and 0.1 to 5 wt% of an n-3 type fatty acid

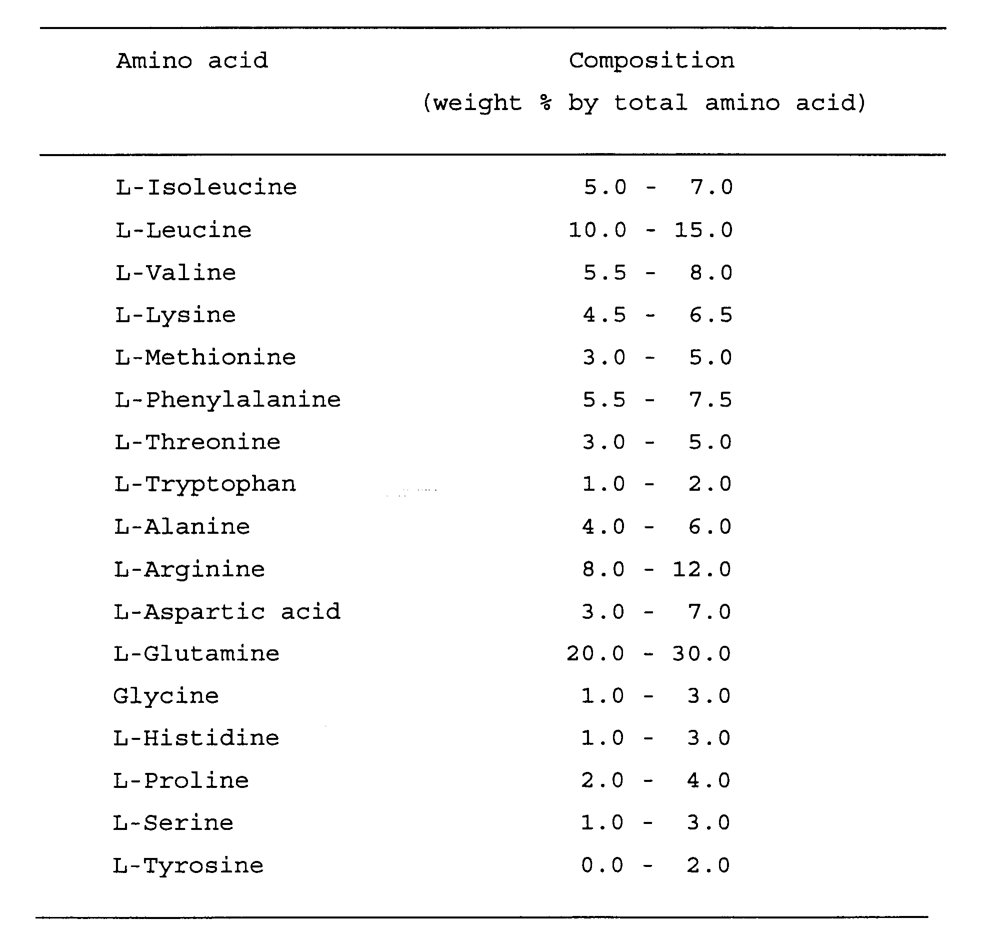

## Description

This invention relates to a nutrient composition for the prophylaxis or treatment of inflammatory bowel disease, including the prevention of its recurrence.

Inflammatory bowel disease such as Crohn's disease or ulcerative colitis is an intractable disease for which a radical remedy is still not established. In the field of pharmacotherapy, steroid hormones, salazopyrin and immunosuppressive drugs have been used, but none of these known drugs can achieve a satisfactory therapeutic effect and they also have various side effects. Therefore, nutrient therapies for keeping the intestine calm, for example enteral nutrition or parenteral nutrition, have mainly been used up to now. However, since there is no nutrient composition having a satisfactory therapeutic effect, the development of nutrient compositions having a higher therapeutic effect has been desired.

In one aspect, the present invention relates to a nutrient composition for prophylaxis or treatment of inflammatory bowel disease comprising 15 to 30 wt% of an amino acid mixture having the following composition (Table 1) and 0.1 to 5 wt% of at least one n-3 type fatty acid. The nutrient composition optionally also includes one or more of a carbohydrate, a vitamin, and a mineral. An n-3 (or ω3) type fatty acid is one having a double bond between carbon atoms 3 and 4 counting from the ω end.

In another aspect, the invention provides a concentrate comprising an amino acid mixture having the composition shown in Table 1 and at least one n-3 type fatty acid in a weight ratio of 300:1 to 3:1, preferably 30:1 to 3:1, which concentrate is suitable for dilution with other foodstuffs (e.g carbohydrates, vitamins, minerals) to provide a nutrient composition of the first aspect.

**Table 1**

| Amino acid | Composition (weight % by total amino acid) |
|---|---|
| L-Isoleucine | 5.0 - 7.0 |
| L-Leucine | 10.0 - 15.0 |
| L-Valine | 5.5 - 8.0 |
| L-Lysine | 4.5 - 6.5 |
| L-Methionine | 3.0 - 5.0 |
| L-Phenylalanine | 5.5 - 7.5 |
| L-Threonine | 3.0 - 5.0 |
| L-Tryptophan | 1.0 - 2.0 |
| L-Alanine | 4.0 - 6.0 |
| L-Arginine | 8.0 - 12.0 |
| L-Aspartic acid | 3.0 - 7.0 |
| L-Glutamine | 20.0 - 30.0 |
| Glycine | 1.0 - 3.0 |
| L-Histidine | 1.0 - 3.0 |
| L-Proline | 2.0 - 4.0 |
| L-Serine | 1.0 - 3.0 |
| L-Tyrosine | 0.0 - 2.0 |

Examples of the n-3 type fatty acid used in the nutrient composition of the present invention include α-linolenic acid, eicosapentaenoic acid and docosahexaenoic acid as well as a natural fat and oil containing a large amount of n-3 type fatty acid such as perilla oil, linseed oil, styrax oil or rape oil. The amount of the n-3 type fatty acid added in the nutrient composition of the present invention is 0.1 to 5 wt%, preferably 0.3 to 3wt%.

Examples of the carbohydrate which may be used in the nutrient composition of the present invention include glucose, sucrose, lactose, dextrin, etc.

As the examples of the fat used in the present invention, a n-6 type fatty acid such as linoleic acid, γ-linolenic acid or arachidonic acid, soybean oil, safflower oil, olive oil, corn oil, sunflower oil, etc. can be used in addition to the n-3 type fatty acid.

In the nutrient composition of the present invention, ordinary additives such as vitamin, mineral or the like may be included. Examples of the vitamin include vitamin A vitamin B complex, vitamin C, vitamin D, vitamin E, nicotinamide, folic acid, pantothenic acid, biotin, choline, etc. Examples of the mineral include sodium chloride, potassium chloride, calcium glycerophosphate, magnesium sulfate, manganese sulfate, zinc sulfate, iron sulfate, copper sulfate, etc. Further, if necessary, it may contain appropriately selected pharmaceutically acceptable excipients such as perfumes, sweeteners, colouring agents, stabilizers, preservatives or pH-controlling agents, etc.

The nutrient composition according to the present invention can be administered to the stomach, duodenum or small intestine by tube feeding, or provided by oral administration. Also, the dose of the nutrient composition of the present invention for use as a human medicine ranges from an amount providing about 500 to 3,000 kcal, preferably 1,500 to 2,500 kcal, though it may be more or less depending on the kind of symptoms, nutritional condition, age and body weight of the patient.

Embodiments of the present invention are now illustrated in greater detail by the following Examples, but it should be understood that the present invention is not limited thereto. The embodiments exemplified are described with reference to the accompanying figures of which:

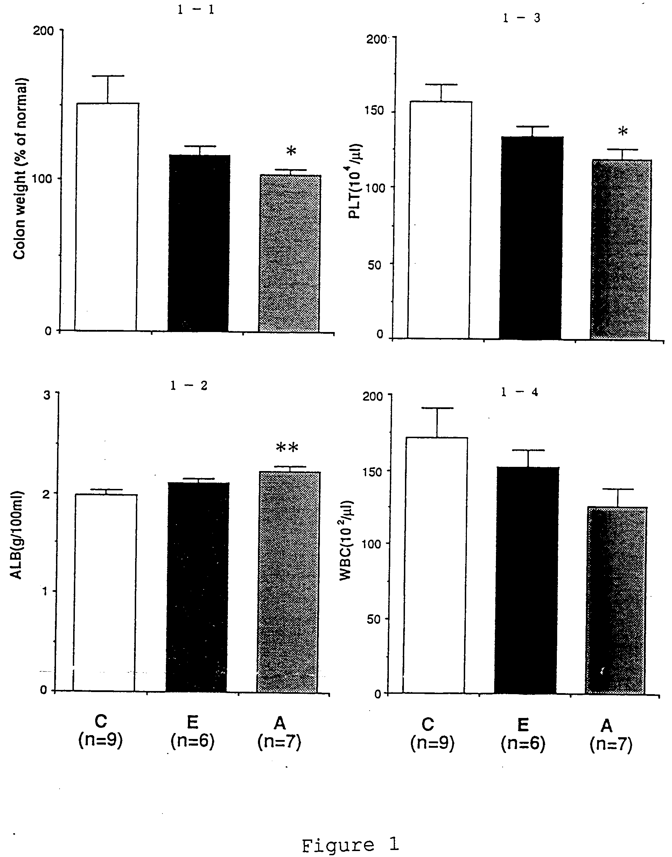

Figures 1-1, 1-2, 1-3 and 1-4 show the weight of the whole colon, the concentration of serum albumin, the number of platelets and the number of leukocytes, respectively measured in blood from the general circulation. "A" represents a group to which a nutrient composition of the present invention was administered. "C" represents a group to which an ordinary feed was administered. "E" represents a group to which a conventional nutrient composition was administered. The single and double asterisks signify that there is a significant difference between group C and group A at p<0.05 and p<0.01 respectively.

Figure 2 shows the survival ratio when each of the nutrient compositions was administered in a rat model of colitis.

Figure 3 shows the level of colonic disorder when each of the nutrient compositions was administered in a rat model of colitis for 12 days. There are significant differences between the groups marked "a", "b" and "c".

### Example 1

**Effect on Inflammation Index in a Rat Model of Colitis:**

16.42 parts of an amino acid composition shown in Table 2 below, 1.43 parts of safflower oil, 0.57 parts of a purified perilla oil, 76.45 parts of dextrin, and 5.13 parts of vitamin and mineral substances were mixed to obtain a nutrient composition (n-3 type fatty acid content: 0.32%, hereinafter referred to as "Composition A"), and the resulting nutrient composition was used for the test below. As comparative samples, an ordinary feed for rats (CRF-1, manufactured by Oriental Yeast Co., Ltd containing: a protein having an amino acid composition shown in Table 3 below: 23.1 parts; a fat: 6.0 parts; a carbohydrate: 52.8 parts; vitamin and mineral substances and the others: 18.1 parts; and n-3 type fatty acid: 0.36%, hereinafter referred to as "Composition C") and an ordinary nutrient composition (Elental, manufactured by Ajinomoto Co., Inc. containing: an amino acid composition shown in Table 4 below: 16.67 parts; soybean oil: 0.64; dextrin: 79.10 parts; vitamin and mineral substances: 3.59 parts; and n-3 type fatty acid content: 0.05%, hereinafter referred to as "Composition E") were used.

7-week-old SD male rats were used as test animals. A solution of 50 mg of trinitrobenzenesulfonic acid (TNBS) dissolved in 1 ml of 50% ethanol was administered to the test animals through their anuses. From the 2nd day, each of the above nutrient compositions was fed to the test animals in the form of powder and freely taken with water. On the 13th day after the TNBS administration, the test animals were killed by beating, and the weight of the whole colon, the concentration of serum albumin, the number of platelets and the number of leukocytes were measured. The results are shown in Figure 1. As can be seen from Figure 1, the group to which the nutrient composition of the present invention was administered (Group A) showed better suppression of the swelling of the colon, less reduction of albumin, and smaller increases in the number of platelets and leukocytes as compared with the group taking the ordinary feed (Group C) and the group taking the conventional nutrient composition (Group E). Thus, a decrease in inflammation was observed.

**Table 2**

| Amino acid | Composition (weight % by total amino acid) |
|---|---|
| L-Isoleucine | 5.96 |
| L-Leucine | 11.93 |
| L-Valine | 5.96 |
| L-Lysine | 5.48 |
| L-Methionine | 3.48 |
| L-Phenylalanine | 6.46 |
| L-Threonine | 3.98 |
| L-Tryptophan | 1.49 |
| L-Alanine | 5.13 |
| L-Arginine | 9.95 |
| L-Aspartic acid | 5.54 |
| L-Glutamine | 24.85 |
| Glycine | 2.00 |
| L-Histidine | 1.99 |
| L-Proline | 2.98 |
| L-Serine | 1.99 |
| L-Tyrosine | 0.83 |

**Table 3**

| Amino acid | Composition (weight % by total amino acid) |
|---|---|
| L-Isoleucine | 4.02 |
| L-Leucine | 7.85 |
| L-Valine | 4.91 |
| L-Lysine | 6.17 |
| L-Methionine | 2.29 |
| L-Phenylalanine | 4.53 |
| L-Threonine | 3.97 |
| L-Tryptophan | 1.26 |
| L-Alanine | 5.56 |
| L-Arginine | 6.45 |
| L-Aspartic acid | 9.58 |
| L-Glutamic acid | 20.05 |
| Glycine | 5.28 |
| L-Histidine | 2.52 |
| L-Proline | 5.98 |
| L-Serine | 4.91 |
| L-Tyrosine | 3.13 |
| L-Cystine | 1.54 |

**Table 4**

| Amino acid | Composition (weight % by total amino acid) |
|---|---|
| L-Isoleucine | 4.82 |
| L-Leucine | 6.74 |
| L-Valine | 5.25 |
| L-Lysine | 5.34 |
| L-Methionine | 4.86 |
| L-Phenylalanine | 6.53 |
| L-Threonine | 3.71 |
| L-Tryptophan | 1.13 |
| L-Alanine | 6.74 |
| L-Arginine | 6.96 |
| L-Aspartic acid | 12.12 |
| L-Glutamine | 14.49 |
| Glycine | 3.79 |
| L-Histidine | 3.06 |
| L-Proline | 4.73 |
| L-Serine | 8.69 |
| L-Tyrosine | 0.83 |

### Example 2

**Effect on Survival in a Rat Model of Colitis**

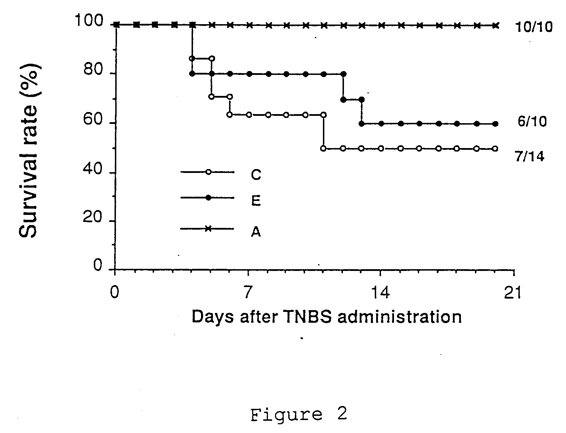

The same nutrient composition as in Example 1 was used, and after inducing colitis in the same manner as in Example 1, the observation of the surviving individuals was carried out every day for 21 days. The results are shown n Figure 2. As shown in Figure 2, dead individuals were observed by the 14th day both in the group taking an ordinary feed (Group C) and the group taking a conventional nutrient composition (Group E), whereas all test animals survived for 21 days in the group taking the nutrient composition of the present invention (Group A).

### Example 3

**Effect on Recovery from Colitis:**

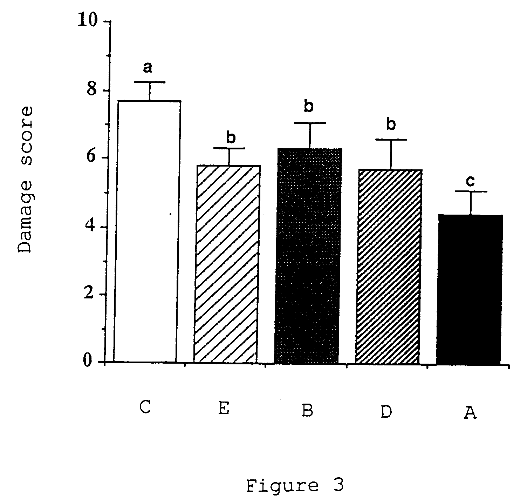

After inducing colitis in the same manner as in Example 1, each of the test animals received from the 2nd day after administration of trinitrobenzenesulfonic acid, the same nutrient compositions as in Example 1, and as additional comparative examples, a nutrient composition in which the amino acid composition of Composition A was replaced by the composition shown in the above Table 4 (Composition B) and a nutrient composition in which the amino acid composition of Composition E was replaced by the composition shown in the above Table 2 (Composition D). On the 12th day from the TNBS administration, the test animals were killed by beating, and the whole colon was evaluated in accordance with the evaluation standard as disclosed in Vilaseca et al, Gut, 31, 539-544(1990). The results are shown in Figure 3. As shown in Figure 3, in comparison with the group taking the conventional nutrient composition (Group E), the recovery effect in each of (1) the group using a different fat composition (Group B) and (2) the group using a different amino acid composition (Group D) was approximately equivalent to that of Group E, but the group taking the nutrient composition of the present invention (Group A) showed excellent signs of recovery. From the above findings, it can be seen that the combination of the amino acid composition and the fatty acid in the nutrient composition according to the present invention provides a synergistic effect.

The nutrient composition of the present invention is very useful as an agent for the treatment of inflammatory bowel disease and the prevention of its recurrence.

## Claims

1. A nutrient composition for the treatment or prophylaxis of inflammatory bowel disease comprising 15 to 30 wt% of an amino acid mixture of the following composition and 0.1 to 5 wt% of at least one n-3 type fatty acid
| Amino acid | Composition (weight % by total amino acid) |
|---|---|
| L-Isoleucine | 5.0 - 7.0 |
| L-Leucine | 10.0 - 15.0 |
| L-Valine | 5.5 - 8.0 |
| L-Lysine | 4.5 - 6.5 |
| L-Methionine | 3.0 - 5.0 |
| L-Phenylalanine | 5.5 - 7.5 |
| L-Threonine | 3.0 - 5.0 |
| L-Tryptophan | 1.0 - 2.0 |
| L-Alanine | 4.0 - 6.0 |
| L-Arginine | 8.0 - 12.0 |
| L-Aspartic acid | 3.0 - 7.0 |
| L-Glutamine | 20.0 - 30.0 |
| Glycine | 1.0 - 3.0 |
| L-Histidine | 1.0 - 3.0 |
| L-Proline | 2.0 - 4.0 |
| L-Serine | 1.0 - 3.0 |
| L-Tyrosine | 0.0 - 2.0 |

2. A nutrient composition according to claim 1, further comprising an n-6 type fatty acid.

3. A nutrient composition according to claim 1 or claim 2, wherein the n-3 type fatty acid is selected from α-linolenic acid, eicosapentaenoic acid, docosahexaenoic acid, and mixtures thereof.

4. A nutrient composition according to any one of the preceding claims, wherein the composition comprises one or more of perilla oil, linseed oil, styrax oil or rape oil, as source of n-3 fatty acid.

5. A nutrient composition according to any one of the preceding claims comprising 0.3-3 wt% of n-3 type fatty acid.

6. A nutrient composition according to any one of the preceding claims further comprising one or more of a carbohydrate, a vitamin, or a mineral.

7. Use of the amino acid mixture specified in claim 1, and an n-3 type fatty acid in the manufacture of a nutrient composition for the treatment or prophylaxis of inflammatory bowel disease.

8. Use according to claim 7 wherein the nutrient composition is for oral administration.

9. Use according to claim 7 wherein the nutrient composition is for administration by tube to the stomach, duodenum or small intestine.

10. Use according to any one of claims 7 to 9 wherein the nutrient composition is for administration in an amount providing 500 to 3000 kcal per day.

11. A concentrate comprising an amino acid mixture as specified in claim 1 and at least one n-3 type fatty acid in a weight ratio of 300:1 to 3:1, which concentrate is suitable for dilution with other foodstuffs to provide a nutrient composition according to any one of claims 1 to 6.
